# EUROPÄISCHE PATENTSCHRIFT

(11) **EP 3 291 713 B1**
(45) Veröffentlichungstag und Bekanntmachung des Hinweises auf die Patenterteilung: **26.03.2025**
(21) Anmeldenummer: 16720413.0
(22) Anmeldetag: 03.05.2016
(51) Int. Cl.: A47J 31/42, A47J 31/44, A47J 31/46, A47J 31/52, A47J 31/60

(54) **ELEKTRISCH BETRIEBENER GETRÄNKEBEREITER (VORZUGSWEISE: KAFFEEMASCHINE) MIT DYNAMISCHER WARTUNGSPLANGENERIERUNG**
ELECTRICALLY OPERATED BEVERAGE MAKER (PREFERABLY COFFEE MACHINE) HAVING DYNAMIC MAINTENANCE PLAN GENERATION
MACHINE DE PRÉPARATION DE BOISSONS ÉLECTRIQUE (DE PRÉFÉRENCE MACHINE À CAFÉ) À GÉNÉRATION DYNAMIQUE DU PLAN D'ENTRETIEN

(30) Priorität: 06.05.2015 DE 102015208375
(43) Veröffentlichungstag der Anmeldung: 14.03.2018
(73) Patentinhaber: WMF GmbH, 73312 Geislingen/Steige (DE)
(72) Erfinder: STARTZ, Armin, 89197 Weidenstetten (DE); ARNDT, Peter, 89134 Blaustein (DE)
(74) Vertreter: Pfenning, Meinig & Partner mbB
(86) Internationale Anmeldenummer: PCT/EP2016/059836
(87) Internationale Veröffentlichungsnummer: WO 2016/177697

(56) Entgegenhaltungen:
- WO-A1-2008/017182
- DE-A1- 102013 101 875
- US-A1- 2007 045 170

## Beschreibung

Die vorliegende Erfindung bezieht sich auf einen elektrisch betriebenen Getränkebereiter, der eine elektrisch betriebene Kaffeemaschine ist, gemäß des Oberbegriffs aus Anspruch 1. Die Erfindung bezieht sich darüber hinaus auf ein Verfahren zum Betrieb eines solchen elektrisch betriebenen Getränkebereiters.

Gemäß des Standes der Technik werden wartungsrelevante Bauteile oder Komponenten von Getränkebereitern nach einer für die jeweilige Komponente bestimmten Laufzeit oder Zyklenzahl (letzteres z.B. ausgedrückt in einer von der jeweiligen Komponente bereits mit gemachten Anzahl von Brühvorgängen bei einer Kaffeemaschine als Getränkebereiter) ausgetauscht. Dabei können, basierend auf der Laufzeit oder der Zyklenzahl, Wartungstermine so gelegt werden, dass unter Berücksichtigung eines vertretbaren Aufwandes der Getränkebereiter (nachfolgend allgemein auch als Maschine bezeichnet) einer möglichst hohen Zuverlässigkeit unterliegt. Typische Laufzeiten können dabei auf Feldauswertungen oder Dauerlaufdaten beruhen und auf Basis einer typischen Ausfallzahl in Abhängigkeit von Zyklen oder der Laufzeit (beispielsweise: 2%) definiert werden. Diese Zyklen oder Laufzeiten von Komponenten werden auf der Maschine gezählt und zu einem Zeitpunkt x wird dann eine notwendige Wartung angezeigt. Beispiel: Wartung des Brühers einer Kaffeemaschine nach einer bestimmten Anzahl von Brühzyklen. Dabei erlauben "intelligente" Maschinen oft ein bestimmtes "Überfahren" der Anzeige, dass eine Wartung einer bestimmten Komponente notwendig ist. Das bedeutet, dass z.B. noch eine bestimmte Anzahl von Zyklen oder eine bestimmte Laufzeit möglich ist, obwohl bereits eine Wartungsanzeige erfolgt, bevor dann diese Komponente vom System selbst gesperrt wird und/oder ein zwanghafter Komponententausch eingefordert wird. Die Dokumente DE 10 2013 101875 A1 und US 2012/245732 offenbaren Geräte, die Wartungstermine für wartungsrelevante Bauteile bestimmen können.

Ausgehend von diesem Stand der Technik ist es die Aufgabe der vorliegenden Erfindung, die Wartungsnotwendigkeit von Komponenten des Getränkebereiters flexibler zu bewerten. Aufgabe ist es darüber hinaus, aus einer solchen flexibleren Bewertung optimale Wartungstermine für die Komponenten zu berechnen bzw. zu prognostizieren.

Ausgangspunkt für die Überlegung der vorliegenden Erfindung ist, dass das aus dem Stand der Technik bekannte, relativ starre System oft nicht berücksichtigt, dass Komponenten des Getränkebereiters je nach Standort und/oder Betriebsbedingungen des Getränkebereiters unterschiedlichen tatsächlichen Belastungen ausgesetzt sind, Komponenten also möglicherweise länger im Betrieb sein könnten, als es alleine deren Laufzeit bzw. Zyklenzahl anzeigt (oder ein Kunde möglicherweise mit gewissen Qualitätseinbußen einverstanden wäre, um Wartungskosten zu sparen). Ebenfalls fällt es mit den bekannten starren Systemen schwer zu bewerten, ob eventuell eine andere Komponente möglicherweise noch bis zu einer nächsten Wartung durchhalten könnte. Die vorliegende Erfindung setzt somit auch am Gedanken an, dass nicht unbedingt die beste Qualität das Ziel einer Wartung sein muss, sondern dass das Ziel einer Wartung auch sein kann, eine ausreichende Qualität bei optimierten Kosten zuverlässig sicherzustellen.

Diese Aufgaben werden durch einen elektrisch betriebenen Getränkebereiter gemäß Anspruch 1 sowie durch ein Verfahren gemäß Anspruch 6 gelöst. Vorteilhafte Ausführungsvarianten lassen sich dabei jeweils den abhängigen Ansprüchen entnehmen.

Nachfolgend wird die vorliegende Erfindung zunächst allgemein, dann anhand eines Ausführungsbeispiels im Detail beschrieben.

Ein erfindungsgemäßer Getränkebereiter lässt sich Anspruch 1 entnehmen. Ein erfindungsgemäßes Verfahren lässt sich Anspruch 6 entnehmen.

Nachfolgend wird der Getränkebereiter alternativ auch als Maschine bezeichnet und insbesondere an einem Beispiel einer Kaffeemaschine beschrieben. Beim erfindungsgemäßen Getränkebereiter handelt es sich um eine Kaffeemaschine.

Der Begriff der "Lastkenngröße" wird nachfolgend alternativ auch als "Lastfaktor" bezeichnet. Dabei kann es sich um eine einzelne Kennzahl handeln, jedoch kann die Lastkenngröße einer Komponente auch mehrere einzelne, jeweils unterschiedliche Aspekte der tatsächlichen Abnutzung der betrachteten Komponente (z.B. die Abnutzung durch den Temperaturverlauf und die Abnutzung durch den Druckverlauf, denen eine Dichtung der Kaffeemaschine im Verlauf der Betriebszeit der Maschine ausgesetzt ist) oder unterschiedlicher Bauelemente (beispielsweise: mehrere Dichtungsteile, an denen jeweils ein solcher Temperatur- und/oder Druckverlauf über die Zeit erfasst wird) derselben beschreibende Kennzahlen umfassen. Die Lastkenngröße(n) der wartungsrelevanten Komponente(n) ist/sind erfindungsgemäß auf Basis von einem oder mehreren mit dem Getränkebereiter erfassten Betriebsparameter(n) und/oder auf Basis von einem oder mehreren Sensor(en) des Getränkebereiters bestimmbar.

Die Lastkenngröße kann in Form einer oder mehrerer Verlaufskurve(n) und/oder daraus abgeleiteter Kennzahl(en) bestimmt werden (beispielsweise die Stromaufnahme und die Spannungsaufnahme über eine definierte Zeitdauer als zwei Verlaufskurven, um als Lastkenngröße bzw. Lastfaktor eines Motors des Mahlwerks einer Kaffeemaschine aus diesen Verlaufskurven die tatsächlich geleistete elektrische Arbeit des Motors mittels einer als Mikrokontroller ausgebildeten, zentralen Steuereinheit der Maschine zu bestimmen bzw. zu berechnen). Bei einer Komponente gemäß Anspruch 1 handelt es sich in der Regel um ein Bauelement des Getränkebereiters, es kann sich jedoch auch um ein Bauelement einer Getränkebereiter-externen Einheit handeln, die mit dem Getränkebereiter verbunden ist und mit diesem zum Herstellen eines gewünschten Getränkes zusammenarbeitet.

Die Zuverlässigkeitskenngröße wird nachfolgend alternativ auch als "Zuverlässigkeits- oder Qualitätslevel" bezeichnet. Bei der Zuverlässigkeitskenngröße handelt es sich um eine Kenngröße (in Form einer einzelnen Kennzahl bzw. eines einzelnen Zahlenwerts, eines n-Tupels von Zahlenwerten oder auch in Form einer oder mehrerer Verlaufskurve(n)), die eine Aussage über die momentan gegebene Zuverlässigkeit und/oder die momentan gegebene Qualität der Komponente (oder auch von Bauteilen derselben) und/oder über eine prognostizierte, zukünftige Zuverlässigkeit und/oder Qualität der Komponente erlaubt. Die Zuverlässigkeitskenngröße kann somit den Zustand einer Komponente hinsichtlich deren Gebrauchszustand beschreiben. Die Zuverlässigkeitskenngröße bzw. das Zuverlässigkeits- oder Qualitätslevel kann dabei auch in eine Mehrzahl (z.B. 1 bis x) von Phasen eingeteilt werden.

Auch die Zuverlässigkeitskenngröße kann dabei als Zahlenwert dargestellt werden bzw. ein Zahlenwert sein, beispielsweise die momentan gegebene Ausfallwahrscheinlichkeit pro Zeitintervall (oder die Ausfallwahrscheinlichkeit bis zu einem berechneten Zeitpunkt, z.B. einem Zeitpunkt, an dem dann eine Wartungsnotwendigkeit angezeigt wird). Die Zuverlässigkeitskenngröße kann auch die Form eines Ausfallwahrscheinlichkeitsverlaufes über die Zeit annehmen (insbesondere: wie sich eine (prognostizierte) Ausfallwahrscheinlichkeit pro Zeiteinheit über die Zeit ändert, also zunimmt). Die Zuverlässigkeitskenngröße kann also auch die Form einer Verlaufskurve annehmen, die einen über die Zeit zunehmenden Wartungsaufwand (ausgedrückt beispielsweise in einer Anzahl auszutauschender Bauteile einer Komponente) charakterisiert. Ebenso wie die Lastkenngröße kann auch die Zuverlässigkeitskenngröße mehrere einzelne Kennzahlen beinhalten. Beispielsweise mehrere Kennzahlen, die unterschiedliche Ausfallgründe einer Komponente (beispielsweise bezogen auf unterschiedliche Bauteile einer Komponente, wie beispielsweise der Brühgruppe, die ausfallen können) berücksichtigen. In die Berechnung der Zuverlässigkeitskenngröße einer wartungsrelevanten Komponente kann/können auch ein oder mehrere bestimmte Lastkenngröße(n) einer oder mehrerer anderer/n wartungsrelevanter/n Komponente(n) eingehen.

Aus einer solchen Zuverlässigkeitskenngröße können dann weitere mit der Notwendigkeit einer Wartung der betroffenen Komponente in Beziehung stehende Kenngrößen bestimmt werden. Ein Beispiel ist hier das Bestimmen des Zeitpunktes einer dringlichen Wartung besagter Komponente, wenn die Ausfallwahrscheinlichkeit pro Zeitintervall bei dieser Komponente einen ersten vordefinierten Wert überschreitet, oder auch des Zeitpunkts einer empfohlenen Wartung besagter Komponente, wenn die Ausfallwahrscheinlichkeit pro Zeiteinheit dieser Komponente einen zweiten vordefinierten Wert überschreitet (wobei der erste vordefinierte Wert größer als der zweite vordefinierte Wert ist). Siehe hierzu auch die nachfolgenden Beispiele.

Unter dem Begriff der "Wartungsrelevanz" wird erfindungsgemäß verstanden, dass die entsprechende Komponente (in der Regel nachdem sie aus der Maschine ausgebaut oder entfernt worden ist) mittels Reparatur instandgesetzt werden soll oder durch ein Neuteil der entsprechenden Komponente ersetzt werden soll, um die volle Funktionsfähigkeit oder zumindest eine bestimmte Mindestfunktionsfähigkeit des Getränkebereiters wiederherzustellen. Der Getränkebereiter kann eine Mikroprozessor-basierte, zentrale Steuereinheit aufweisen, mittels derer die Lastkenngrößen und die Zuverlässigkeitskenngrößen der wartungsrelevanten Komponenten berechnet werden können. Unter Wartungsrelevanz fallen auch Wartungsarbeiten, die vom Betreiber zur Pflege der Maschine durchgeführt werden können, wie eine Systemreinigung oder eine Reinigung einzelner Komponenten. Unter Wartung bzw. Wartungsrelevanz wird somit erfindungsgemäß alles verstanden, was notwendig oder hilfreich ist, um die korrekte Funktion der entsprechenden Komponente wieder herzustellen oder aufrecht zu erhalten.

Unter der tatsächlichen Betriebsdauer (die nachfolgend alternativ auch als Laufzeit bezeichnet wird) wird die aufsummierte Zeitdauer, die angibt, wie lange die betrachtete Komponente tatsächlich in Betrieb war, verstanden (z.B. die Zeitdauer, über die ein Motor tatsächlich in Betrieb war, unabhängig von dessen tatsächlicher Stromaufnahme und Spannungsaufnahme während des Betriebs, oder auch die Zeit, über die ein Druck an einer Dichtung anlag, unabhängig von der konkreten Höhe des anliegenden Drucks). Unter einer Betriebsdauerkennzahl kann beispielsweise die Anzahl von Brühzyklen einer elektrischen Kaffeemaschine als Getränkebereiter (diese Anzahl wird nachfolgend alternativ auch als Zyklenzahl bezeichnet) verstanden werden, die die betrachtete Komponente der Maschine bisher tatsächlich durchlaufen hat.

Im Unterschied zur Lastkenngröße kennzeichnen die Betriebsdauer oder die Betriebsdauerkennzahl bzw. die Laufzeit oder die Zyklenzahl gerade nicht die tatsächliche Abnutzung einer solchen Komponente, sondern lediglich die Zeitdauer, über die die besagte Komponente tatsächlich in Betrieb war (so dass hiermit nur eine vereinfachte, grobe Abschätzung der tatsächlichen Abnutzung besagter Komponente möglich wäre).

Weitere vorteilhafterweise realisierbare Merkmale der Erfindung lassen sich dem Anspruch 2 entnehmen.

Bei den vorgegebenen Eigenschaften (die nachfolgend alternativ auch als "Komponenten-Setup" bezeichnet werden) kann es sich insbesondere um messbare technische, z.B. mechanische, elektrische oder elektronische Eigenschaften, handeln. Beispiele sind die Güte von Mahlscheiben eines Mahlwerks einer Kaffeemaschine, ausgedrückt z.B. im verwendeten Mahlscheibenmaterial und/oder im Härtegrad der Mahlscheiben. Solche vordefinierten Eigenschaften können aber auch festgelegte, jedoch nicht messbare technische Eigenschaften wie z.B. eine Qualitätsstufe einer verwendeten Dichtung oder eine Art (Typ bzw. Funktionsprinzip) eines Wasserfilters sein usw.

Betriebsparameter können Parameter sein, die während des Betriebs der Maschine bestimmt (und z.B. mit ihrem zeitabhängigen Verlauf in einem Datenspeicher der Maschine mitgeschrieben werden). Beispiele hierfür sind die Stromaufnahme und die Spannungsaufnahme eines Motors des Mahlwerks einer Kaffeemaschine: Hieraus kann, wie bereits beschrieben, die tatsächlich vom Motor geleistete elektrische Arbeit berechnet und für die Berechnung der Zuverlässigkeitskenngröße dieses Motors verwendet werden. Ebenso kann mittels eines Fotosensors die (momentane) Helligkeit einer Anzeige (Display) des Getränkebereiters erfasst werden, wodurch sich der Abnutzungsgrad (beispielsweise durch Verschmutzung und/oder auch durch Nachlassen der Leuchtstärke) der Hintergrundbeleuchtung der Anzeige bestimmen lässt. Druck- oder Kraftsensoren können mechanische Belastungen (oder Belastungsverläufe über die Zeit) von Komponenten oder Bauteilen derselben erfassen, wodurch sich deren tatsächlicher Abnutzungsgrad z.B. in Form von mit der Zeit zunehmender Bruchwahrscheinlichkeit bestimmen lässt.

Weitere vorteilhafterweise realisierbare Merkmale lassen sich Anspruch 3 entnehmen.

Gemäß Anspruch 1 kann eine Wartungsanweisung insbesondere ein Wartungszeitpunkt, eine Wartungsempfehlung und/oder auch ein an den Getränkebereiter selbst gerichteter Wartungsbefehl sein (oder beinhalten). Ein Wartungszeitpunkt kann insbesondere ein Zeitpunkt sein, zu dem die als prognostizierter Ausfallwahrscheinlichkeitsverlauf für die Komponente berechnete Zuverlässigkeitskenngröße einen vordefinierten Wert annehmen bzw. über- oder unterschreiten wird. Beispielsweise kann dann als zugehörige Wartungsempfehlung auf einer Anzeige des Getränkebereiters ausgegeben werden "Komponente ... [Bezeichnung der Komponente] wird voraussichtlich innerhalb der nächsten ... [= berechneter Wartungszeitpunkt] Betriebsstunden ausfallen. Ersetzen dieser Komponente wird dringend/bald/... [je nach berechnetem Zeitpunkt] empfohlen."

Als Wartungsbefehl kann beispielsweise ein Befehl der Art "Sperren des Getränkebereiters [oder der betroffenen Komponente] nach weiteren ... [vordefinierte Anzahl noch erlaubter Getränke] Getränke" generiert bzw. kodifiziert werden, was zusätzlich auch als Wartungsempfehlung angezeigt werden kann: In einem solchen Fall wird die Anzahl der noch erfolgenden Getränkezyklen gezählt und die Maschine (bzw. die betroffene Komponente) dann, wenn diese Anzahl erreicht ist, automatisch gesperrt, bis die entsprechende Komponente ersetzt, repariert, gepflegt oder gereinigt worden ist.

Es können auch "Warnzeitpunkte" als Wartungszeitpunkte berechnet und zu diesen Zeitpunkten entsprechende Wartungsempfehlungen angezeigt werden (z.B. "Komponente ... [betroffene Komponente] bald verbraucht"), ohne dass konkrete Wartungsbefehle generiert bzw. kodifiziert werden. Dies ermöglicht ein Überfahren der Komponente, also ein Weiterverwenden dieser Komponente über eine bestimmte Zeitdauer bzw. Zyklenzahl, obwohl diese eigentlich bereits verbraucht ist. Somit werden die Zuverlässigkeit und die Qualität einer Komponente umso geringer (also die Ausfallwahrscheinlichkeit einer Komponente umso höher), je länger diese Komponente überfahren worden ist.

Unter dem Begriff der "Wartungsnotwendigkeit" kann erfindungsgemäß ein definierter Zustand verstanden werden, in dem eine Zuverlässigkeitskenngröße bzw. ein Zuverlässigkeits- oder Qualitätslevel dieser Komponente nicht mehr erreicht wird.

Wartungsrelevante Komponenten können insbesondere Komponenten, Einzelteile oder Funktionsgruppen des Getränkebereiters sein, die für die Sicherstellung der Zuverlässigkeit und der Qualität des Getränkebereiters eine regelmäßige Wartung benötigen. Beispiele sind Wasserfilter, Mühlen, Pumpen, Ventilatoren, Dichtungen, Anzeigeelemente, Bedienelemente, Ausläufe usw. Unter einer Wartung kann erfindungsgemäß ein Eingriff eines Servicetechnikers (oder auch eines Bedieners) verstanden werden, um die Maschinensicherheit und die Maschinenqualität aufrechtzuerhalten.

Weitere vorteilhafterweise realisierbare Merkmale lassen sich Anspruch 4 entnehmen.

Dabei sind Umgebungsbedingungen Parameter, die den tatsächlichen oder geplanten Aufstellungsort des Getränkebereiters kennzeichnen. Dies können physikalische Parameter sein (beispielsweise Luftfeuchtigkeit oder Temperatur, die in die Berechnung einer Zuverlässigkeitskenngröße für die Dichtungen, Ventile, Ventilatoren oder Portionierer eingehen können, oder auch die Umgebungshelligkeit, die eingehen kann in eine Mindestanzeige-Helligkeit als Zuverlässigkeitskenngröße, die die Anzeige der Maschine noch haben muss) oder auch chemische Parameter sein (beispielsweise: Verwendung der Maschine in Großküchen oder Kantinen in denen eine fettige und feuchtwarme Umgebung vorliegt oder Verwendung der Maschine in Gebieten mit mineralarmem Wasser, welches sehr aggressiv ist und Dichtungen und auch andere Materialen angreifen kann).

Dabei kann der Getränkebereiter entsprechende Sensoren zum Erfassen solcher Parameter aufweisen (beispielsweise Umgebungstemperatursensor oder Drucksensor).

Die externe Recheneinrichtung wird nachfolgend alternativ auch als ausgelagertes System, (externer) Rechner oder (externer) Server bezeichnet. Weitere vorteilhafterweise realisierbare Merkmale lassen sich Anspruch 5 entnehmen.

Dabei erfolgen vorzugsweise die Bestimmung einer Lastkenngröße und die Berechnung einer Zuverlässigkeitskenngröße für jede der in diesem Anspruch genannten wartungsrelevanten Komponenten (einer Kaffeemaschine als Getränkebereiter).

Nachfolgend wird die vorliegende Erfindung anhand eines Ausführungsbeispiels gemäß der folgenden Figuren 1 bis 8b im Detail beschrieben.

Dabei zeigen:
Figur 1 den grundlegenden Aufbau einer erfindungsgemäßen Kaffeemaschine.
Figur 2 die Vorgehensweise der Erfindung bei der Bestimmung von Zuverlässigkeitskenngrößen.
Figur 3 ein Beispiel für die erfindungsgemäße Beurteilung einer Wartungsnotwendigkeit von Komponenten mit Phaseneinteilung.
Figur 4 ein Beispiel einer erfindungsgemäßen Zuverlässigkeitskenngröße in Form einer Ausfallwahrscheinlichkeit pro Zeiteinheit in Abhängigkeit von der Betriebszeit der entsprechenden Komponente.
Figur 5a ein Beispiel für eine erfindungsgemäß mögliche Wartung mit festen Zeitabständen der Wartungsintervalle bei variablen Wartungsumfang je Wartungsvorgang.
Figur 5b ein weiteres Beispiel, bei dem die Wartung bzw. der Wartungsumfang je Wartungsvorgang jeweils fest vorgegeben ist, die Zeitintervalle zwischen den einzelnen Wartungsvorgängen jedoch erfindungsgemäß je nach Wartungsanforderung (ausgehend von der/den bestimmten Lastkenngröße(n)) unterschiedlich berechnet werden (dynamische Wartung).
Figur 5c ein Beispiel zur Berechnung des nächsten Wartungszeitpunktes nach Auswertung der ersten, festen Zeitspanne aus Figur 5b.
Figur 5d eine erfindungsgemäße Berechnung von Wartungsvorgängen, bei denen sowohl die Zeitabstände der einzelnen Wartungsvorgänge, als auch deren Wartungsumfang berechnet werden bzw. variieren.
Figur 6: Beispiele für Ausfallwahrscheinlichkeiten pro Zeitintervall in Abhängigkeit der Betriebszeit für verschiedene Komponenten, die erfindungsgemäß beim Berechnen der Zuverlässigkeitskenngrößen der Komponenten berücksichtigt werden können.
Figuren 7a und 7b Beispiele für Basisindikatoren bei wartungsrelevanten Komponenten, die bei der Berechnung von Zuverlässigkeitskenngrößen der Komponenten berücksichtigt werden können.
Figuren 8a und 8b Beispiele für erfindungsgemäß berechnete Zuverlässigkeitskenngrößen und daraus abgeleitete benutzer- bzw. gerätespezifische Kenngrößen.

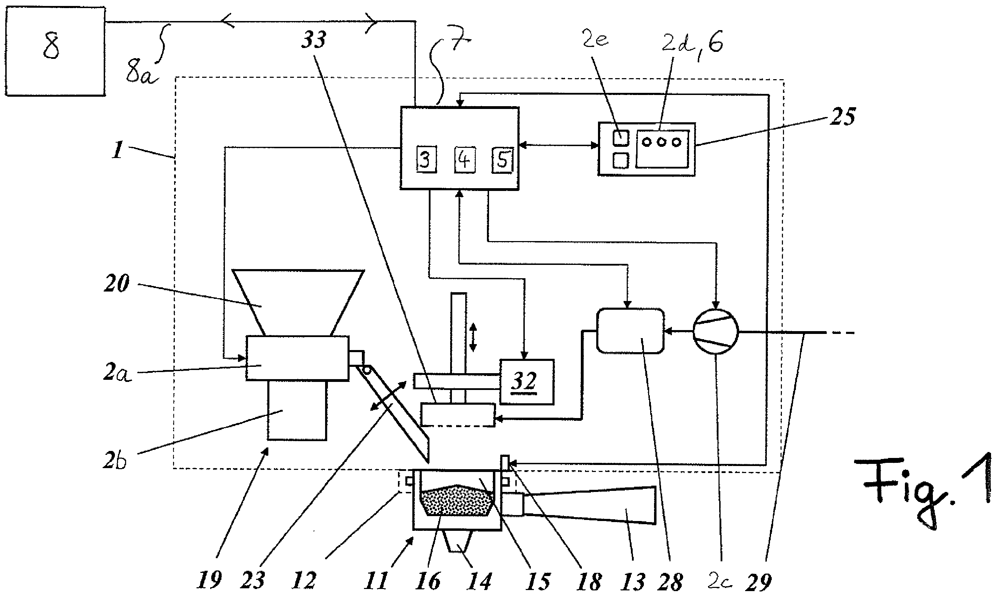

Figur 1 zeigt den Aufbau einer erfindungsgemäßen Kaffeemaschine 1 in einem vereinfachten Schema. Die grundlegenden, nicht die vorliegende Erfindung betreffenden Elemente der erfindungsgemäße Kaffeemaschine 1 sind auf den Seiten 9 bis einschließlich 11 der WO 2013/117362 A1 beschrieben, so dass diese drei Beschreibungsseiten mit ihrem gesamten Offenbarungsgehalt in das Ausführungsbeispiel der vorliegenden Anmeldung mit einbezogen werden. Die gemäß der vorliegenden Erfindung einer Abnutzung unterworfenen, wartungsrelevanten Komponenten, die im vorliegenden Ausführungsbeispiel betrachtet werden, sind dabei das Mahlwerk 2a (entspricht dem Mahlwerk 21 in WO 2013/117362 A1), der Antriebsmotor 2b des Mahlwerks 2a (Bezugszeichen 22 in WO 2013/117362 A1), die Pumpe 2c (entsprechend Bezugszeichen 31 in der WO 2013/117362 A1) zum Boiler 28 der Kaffeemaschine 1, die optische Anzeige (Display) 2d (entspricht der Anzeige 27 in WO 2013/117362 A1) und die Bedieneinheit mit Drucktasten 2e der Kaffeemaschine 1 (entspricht der Bedieneinheit 26 in WO 2013/117362 A1). Die wartungsrelevante Komponente 2d bzw. die Anzeige ist hier parallel mit dem Bezugszeichen 6 versehen, da sie hier einerseits selbst wartungsrelevante Komponente ist, andererseits aber auch zum Ausgeben von Wartungsanweisungen für alle wartungsrelevanten Komponenten 2a bis 2e dient. Die Einheit aus Anzeige 2d bzw. 6 und Bedieneinheit 2e ist mit dem Bezugszeichen 25 gekennzeichnet.

Die für die vorliegende Erfindung nicht maßgeblichen Bauelemente (vgl. Seiten 9 bis 11 der WO 2013/117362 A1) sind wie folgt: Siebträger 11, Siebträgerhalterung 12, Handgriff 13 des Siebträgers 11, Auslauföffnung 14 des Siebträgers 11, Brühraum 15, Kaffeemehl 16 (im Siebträger 11), Siebträger-Verriegelung 18, Bohnenbehälter 20, Kaffeemühle 19 (umfasst Mahlwerk 2a, Antriebsmotor 2b desselben sowie Bohnenbehälter 20), Schütte 23 vom Mahlwerk 2a in den Siebträger 11, Verteilersieb-Element nach Art eines Kolbens 33, Antriebseinheit 32 des Elementes 33, Heißwasserbereiter 28 sowie Kaltwasseranschluss der Maschine 1 mit Bezugszeichen 29.

Erfindungsgemäß entscheidend sind neben den wartungsrelevanten Komponenten 2a bis 2e die nachfolgend noch beschriebenen Merkmale 3 bis 7 der Kaffeemaschine 1 sowie die Kaffeemaschinen-externe Recheneinrichtung 8 sowie die bidirektionale Datenleitung 8a, die diese externe Recheneinrichtung 8 mit der zentralen Steuereinheit 7 der Kaffeemaschine 1 verbindet (die Verbindung kann dabei über das Internet erfolgen). Die zentrale Steuereinheit 7 entspricht dabei der um entsprechende Hardware-Elemente und Programme gemäß der vorliegenden Erfindung erweiterten zentralen Steuereinheit 24 aus der WO 2013/117362 A1. Das Bezugszeichen 3 bezeichnet die die tatsächlichen Abnutzungen der Komponenten 2a bis 2e kennzeichnenden Lastkenngrößen. Das Bezugszeichen 4 bezeichnet die unter Berücksichtigung der jeweiligen Lastkenngrößen 3 der wartungsrelevanten Komponenten 2a bis 2e mittels der Steuereinheit 7 berechneten Zuverlässigkeitskenngrößen der Komponenten 2a bis 2e. Das Bezugszeichen 5 bezeichnet die tatsächlichen Laufzeiten der wartungsrelevanten Komponenten 2a bis 2e (charakterisierende Betriebsdauerkennzahlen 5 der Komponenten 2a bis 2e ausgedrückt in der jeweiligen Laufzeit der betrachteten Komponente). Die Lastkenngrößen 3, Zuverlässigkeitskenngrößen 4 und Betriebsdauerkennzahlen 5 werden von der Steuereinheit 7 erfasst bzw. berechnet und in einem nicht-gezeigten Datenspeicher der Steuereinheit 7 abgelegt.

Als Lastkenngröße 3 des Antriebsmotors 2b wird erfindungsgemäß beispielsweise die aus der tatsächlichen Stromaufnahme und der tatsächlichen Spannungsaufnahme über die Betriebsdauer des Motors 2b errechnete tatsächlich geleistete elektrische Arbeit des Motors 2b verwendet. Die Stromaufnahme und die Spannungsaufnahme werden dabei als im Speicher der Steuereinheit 7 während des Betriebes der Maschine 1 laufend mitgeschriebene Betriebsdaten verwendet. Die elektrische Arbeit errechnet sich dann aus der Motorlaufzeit, der Stromaufnahme während dieser Laufzeit und der Spannungsaufnahme während dieser Laufzeit. Als Zuverlässigkeitskenngröße 4 des Motors 2b wird beispielsweise erfindungsgemäß aus der vorgenannten Lastkenngröße 3 des Motors 2b über die Laufzeit des Motors 2b mit der Steuereinheit 7 ständig die (zeitabhängige) Ausfallwahrscheinlichkeit pro Zeiteinheit des Motors 2b berechnet. Sobald diese Ausfallwahrscheinlichkeit pro Zeiteinheit einen vordefinierten Wert übersteigt, kann in der Anzeige 6 ein entsprechender Warnhinweis gegeben werden (z.B. "Antriebsmotor des Mahlwerks abgenutzt. Bitte Wartungsservice verständigen.").

Ein weiteres Beispiel ist die Anzeige 2d, die im Laufe der Zeit in ihrer Helligkeit nachlässt. Hier wird mittels einer Fotodiode (nicht gezeigt) die Leuchtstärke der Hintergrundbeleuchtung der Anzeige 2d als Lastkenngröße 3 der Anzeige 2d gemessen. Alternativ kann diese Leuchtstärke auch berechnet werden aus der Einschaltzeit und dem vom Benutzer eingestellten Helligkeitswert. Diese Lastkenngröße kennzeichnet den Alterungsprozess der Anzeige 2d. Als Zuverlässigkeitskenngröße 4 der Anzeige 2d kann dabei unmittelbar die Lastkenngröße 3 der Anzeige 2d verwendet werden: Ganz allgemein kann somit bei einer wartungsrelevanten Komponente die Zuverlässigkeitskenngröße 4 auch identisch mit der Lastkenngröße 3 der betrachteten wartungsrelevanten Komponente sein. Sobald besagte Lastkenngröße 3 bzw. Zuverlässigkeitskenngröße 4 der Anzeige 2d einen vordefinierten Wert (Mindesthelligkeit) unterschreitet, kann auf der Anzeige 2d bzw. 6 als Wartungsempfehlung "Anzeigeeinheit verbraucht, Komponente bitte tauschen." ausgegeben werden.

Ebenso können mit geeigneten Sensoren (nicht gezeigt) der Kaffeemaschine 1 die Abnutzungszustände der Tasten der Bedieneinheit 2e (z.B. mit einem Geräuschsensor) sowie der Pumpe 2c (z.B. mit einem Drucksensor) vermessen werden, um geeignete Lastkenngrößen 3 dieser Komponenten 2c, 2e zu bestimmen, aus denen dann geeignete Zuverlässigkeitskenngrößen 4 für diese beiden Komponenten 2c, 2e berechnet werden können. Entsprechendes gilt für das Mahlwerk 2a, das z.B. im Hinblick auf den Zustand seiner Mahlscheiben mittels eines optischen Sensors (nicht gezeigt) vermessen werden kann. Beim Mahlwerk 2a kann zusätzlich zu den erfassten Messwerten die Güte (z.B. Materialqualität) der Mahlscheiben in die Lastkenngröße 3 des Mahlwerks 2a eingehen. Ebenso ist die Messung von Brühdruck und Brühzeit möglich: Steigen diese an, hat sich der Feinstaubanteil des Kaffeemehls erhöht, was ein Indikator für den Verschleiß der Mahlscheiben ist.

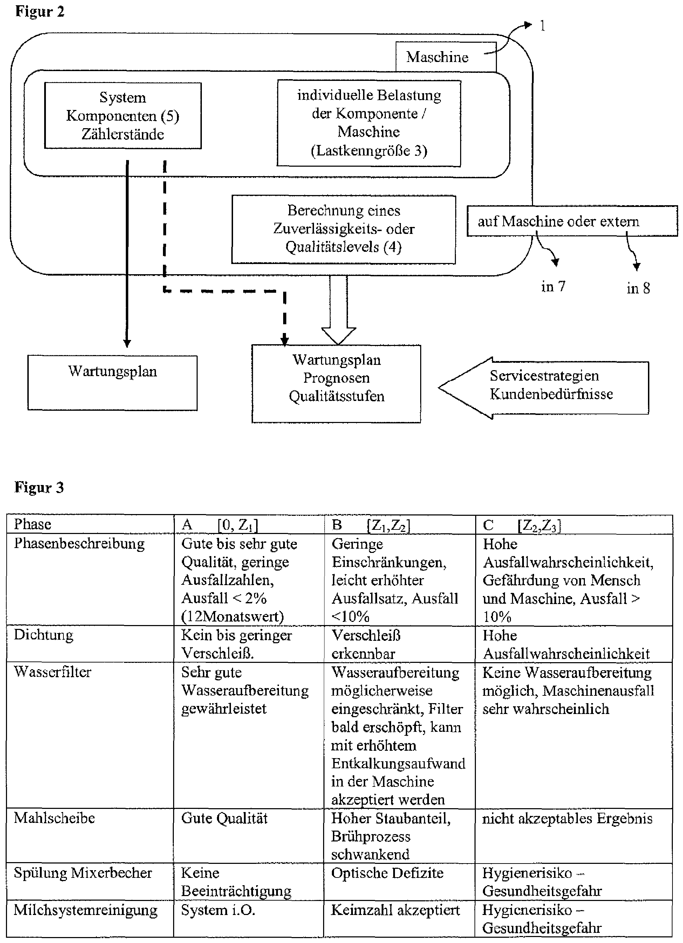

Figur 2 zeigt, wie in der Maschine gemäß Figur 1 erfindungsgemäß auf Basis der bestimmten Lastkenngrößen 3 und der daraus berechneten Zuverlässigkeitskenngrößen 4 der wartungsrelevanten Komponenten 2a bis 2e Wartungspläne, Ausfallprognosen, Qualitätsstufen zur Kennzeichnung der momentan vorliegenden Komponentenqualität etc. aufgestellt werden können (Figur 2, mittlere Spalte). Dabei können auch (über entsprechende Zählerstände, die in der Steuereinheit 7 erfasst werden) die tatsächlichen Betriebsdauern bzw. tatsächlich durchlaufene Arbeitszyklen der einzelnen Komponenten in die Aufstellung der Wartungspläne, Prognosen und/oder Qualitätsstufen eingehen (gestrichelter Pfeil in Figur 2). Gemäß Figur 2 wäre es vereinfacht auch möglich, beim Aufstellen z.B. eines Wartungsplanes einer Komponente ausschließlich deren tatsächliche Betriebsdauer zu berücksichtigen (Figur 2, linke Spalte): Dies entspricht dem bereits aus dem Stand der Technik Bekannten.

Erfindungsgemäß wird somit ein elektrischer Getränkebereiter ermöglicht, der der Planung und Prognose von Wartungsterminen bzw. der Durchführung eines Verfahrens zur Planung und Prognose von Wartungsterminen befähigt ist. Dabei können alle Berechnungen (z.B. der Lastkenngrößen 3 sowie der Zuverlässigkeitskenngrößen 4 auch unter Berücksichtigung von Betriebsdauerkennzahlen 5 der Komponenten 2a bis 2e) in der Steuereinheit 7 der Maschine 1 selbst durchgeführt werden. Ebenso ist es jedoch auch möglich, dass von der Maschine 1 selbst nur Basisdaten erfasst werden und über die bidirektionale Datenleitung 8a (z.B. über das Internet) an ein ausgelagertes System (zentraler Server) 8 gesendet werden. Im System 8 werden dann die entsprechenden Berechnungen durchgeführt und die Berechnungsergebnisse, insbesondere die aus den berechneten Zuverlässigkeitskenngrößen ermittelten Wartungsanweisungen, können über die bidirektionale Datenleitung 8a zurück an die Maschine 1 zur Anzeige auf deren Display 6 übermittelt werden. Dies hat den Vorteil, dass die Berechnung der Zuverlässigkeitskenngrößen bzw. der daraus abgeleiteten Wartungsinformationen oder Wartungsprognosen nach neuesten Erkenntnissen jeweils auf dem externen Server 8 angepasst werden können, ohne dass am Aufstellungsort der Maschine 1 die Programmierung der zentralen Steuereinheit 7 der Maschine 1 entsprechend geändert werden müsste. (Selbstverständlich ist es jedoch auch möglich, diese Programmierung per Fernwartung über die bidirektionale Datenleitung 8a in der Maschine 1 zu verändern.)

Erfindungsgemäß kann somit eine Wartungsnotwendigkeit von Komponenten 2a bis 2e über deren jeweilige tatsächliche Belastung z.B. in Form von Verschleißfunktionen errechnet werden. Eine Wartungsnotwendigkeit einer wartungsrelevanten Komponente kann individuell durch eine oder mehrere der Komponente zugeordnete Zuverlässigkeitskenngröße(n) geplant werden. Dabei können Wartungsumfänge und/oder Wartungshäufigkeiten durch Zielvorgaben von Wartungskosten und/oder Zuverlässigkeitsanforderungen (z.B. kumulierte Zuverlässigkeits- oder Qualitätslevel der Maschine 1) festgelegt werden. Zur Berechnung von Zuverlässigkeitskenngrößen von Komponenten können dabei geeignete Kurvenfunktionen verwendet werden.

Erfindungsgemäß ist die Berechnung von Ausfallprognosen und/oder von Wartungszeitpunkten auf der Maschine 1 selbst oder mit Hilfe eines externen Systems 8 möglich. Berechnete Wartungszeitpunkte und Wartungsumfänge können zur Planung von Serviceintervallen und für die Planung eines Servicenetzes für verkaufte Kaffeemaschinen 1 eingesetzt werden. In eine zukünftige Wartungsplanung können über Interpolation auch zurückliegend erfasste Betriebsdaten eingehen. Auch kann bei einer Prognose-Erstellung ein geändertes Nutzungsverhalten berücksichtigt werden (z.B. unterschiedlicher Betrieb von Kaffeemaschinen im Sommer- und im Winterhalbjahr). Anhand der berechneten Zuverlässigkeitskenngrößen unterschiedlicher wartungsrelevanter Komponenten können unterschiedliche Wartungsanweisungen generiert werden: So kann z.B. für eine Bedieneinheit einer im Innenraum eines Gebäudes aufgestellten Kaffeemaschine eine andere Wartungsanweisung generiert werden, als für eine Kaffeemaschine, die im Außenbereich aufgestellt ist. Berechnungen von Zuverlässigkeitskenngrößen bzw. von Zuverlässigkeits- oder Qualitätsleveln unterschiedlicher Komponenten (oder des kompletten Geräts 1) können bei einer angenommenen Wartungsterminierung erfolgen. Insbesondere können für die Erfassung der tatsächlichen Abnutzung der wartungsrelevanten Komponenten Sensoren (z.B. Geräuschsensoren, Drucksensoren, ...) zum Einsatz kommen.

Beispielsweise kann somit erfindungsgemäß die Wartung des Mahlwerks 2a unter Berücksichtigung der tatsächlichen Belastung dieses Mahlwerks (die eine andere als bei anderen Komponenten der Maschine 1 sein kann) erfolgen: So ist beispielsweise die Belastung eines Mahlwerks bzw. dessen Mühle zum einen abhängig davon, wie oft das Mahlwerk überhaupt zum Einsatz kommt (oft sind in der Maschine 1 mehrere Mahlwerke 2a verbaut, die dann je nach Getränkeverteilung unterschiedliche Laufzeiten haben), andererseits aber auch davon abhängig, mit welcher tatsächlichen Leistung (Stromaufnahme x Spannungsaufnahme) das Mahlwerk über welche Zeit (angegeben z.B. in Wh) betrieben wird. Als weitere Kennzahl, die in die Lastkenngröße des Mahlwerks eingeht, kann beispielsweise die verwendete Bohnensorte (hart, Fremdstoffgehalt, Bohnengüte) mit berücksichtigt werden, da auch diese den Mahlscheibenverschleiß beeinflusst.

Erfindungsgemäß kann somit die Bestimmung von Zuverlässigkeitskenngrößen von wartungsrelevanten Komponenten eines Getränkebereiters auf Basis von Lastfaktoren der Komponenten (die beispielsweise über Sensoren bestimmt werden können oder auch aus Betriebsdaten der Maschine auslesbar sind) erfolgen. Zusätzlich dazu können auch die reinen Zählerstände bzw. Zyklenzahlen berücksichtigt werden: z.B. Anzahl von Brühzyklen, Anzahl Mühlendosierungen, Taktzahlen von Ventilen, Laufzeiten von Motoren, Getränkezählerstände oder dergleichen. Auch können feste Werte (wie z.B. die Güte von Mahlscheiben, die Art von verwendeten Wasserfiltern, ...) beim Bestimmen der Lastkenngrößen bzw. dem Berechnen der Zuverlässigkeitskenngrößen berücksichtigt werden. Solche festen Werte können auch als Maschinen-Setup bezeichnet werden.

Erfindungsgemäß werden Lastkenngrößen (Lastfaktoren), die die tatsächliche Abnutzung von wartungsrelevanten Komponenten kennzeichnen, in der Berechnung der Zuverlässigkeitskenngrößen der Komponenten (z.B. Qualitätslevel) berücksichtigt. Beispielsweise altert eine Dichtung bei zunehmender Temperatur deutlich schneller. Mit dem (gemessenen oder indirekt ermittelten) Temperaturverlauf an der Dichtung über die Zeit kann dieser Faktor bzw. diese Lastkenngröße bei der Berechnung der Zuverlässigkeitskenngröße der Dichtung als wartungsrelevanter Komponente berücksichtig werden. Als weiterer Faktor, der in die Lastkenngröße der Dichtung eingeht, kann der tatsächlich an der Dichtung herrschende Druck über die Zeit bei der Berechnung der Zuverlässigkeitskenngröße berücksichtigt werden. Auch schaden Laugen oder Säuren (beispielsweise während einer Reinigung) einer Dichtung. Eine Berücksichtigung der Zeitdauer und Häufigkeit der Reinigung als zusätzlicher Faktor der Lastkenngröße der Dichtung kann ebenfalls in die Berechnung der Zuverlässigkeitskenngröße der Dichtung mit einfließen. Bei einem Motor (z.B. des Mahlwerks 2a) ist neben der reinen Einschaltzeit (Laufzeit) erfindungsgemäß eine Stromüberwachung und eine Spannungsüberwachung sinnvoll: Damit kann auf die tatsächlich geleistete elektrische Arbeit des Motors geschlossen werden. Weiter kann auch z.B. als weiterer Faktor der Lastkenngröße des Motors bei der Berechnung der Zuverlässigkeitskenngröße des Motors der Anlaufstrom des Motors mit einfließen, um den Motorzustand optimal zu bewerten.

Solche Faktoren von Lastkenngrößen bzw. die Lastkenngrößen können oft aus den Betriebsdaten der Maschine 1 (z.B. aus einem geeigneten Datenspeicher der zentralen Steuereinheit 7) ausgelesen werden und können sich insbesondere auch auf gemessene Werte (Beispiel: Mühlenlaufzeit multipliziert mit Strom und Spannung) beziehen. In die Berechnungsformel für die Zuverlässigkeitskenngröße einer Komponente können wie vorbeschrieben verschiedene Faktoren der Lastkenngröße(n) der Komponente eingehen. Beispielsweise kann die Lastkenngröße für die Mahlscheiben eines Mahlwerks 2a neben der Zahl an Betriebszyklen 5, die die Mahlscheiben bei Brühungen tatsächlich durchlaufen haben, auch den Anteil (Mühlenlaufzeit) je Getränk, die Bohnensorte (hart/weich/fremdstoffbelastet) und die Güte der Malscheiben (günstig, hochwertig) mit berücksichtigen. Lastkenngrößen bzw. Faktoren derselben können ebenso wie Kurvenfunktionen (Zeitverläufe) von Lastkenngrößen bzw. Faktoren derselben flexibel nach neuesten Erkenntnissen angepasst werden: Dabei ist es vorteilhaft, die Datenverarbeitung auf dem externen Server 8 durchzuführen (also z.B. die Zuverlässigkeitskenngrößen aus den Lastkenngrößen auf dem Server 8 zu berechnen) und anschließend die Schlussfolgerungen aus den berechneten Zuverlässigkeitskenngrößen (insbesondere: entsprechende Wartungsanweisungen) auf dem Display 6 der Maschine 1 anzuzeigen.

Erfindungsgemäß können zur Beurteilung einer Wartungsnotwendigkeit von Komponenten die Zustände bzw. die Zuverlässigkeitskenngrößen von Komponenten in mehrere Phasen eingeteilt werden. Ein Kriterium, wann eine Komponente auszutauschen ist, kann unterschiedlich gewählt werden. Bei bestimmten Komponenten kann die zuverlässige mechanische Funktion im Vordergrund stehen (z.B. bei Dichtungen), so dass nur eine kleine Ausfallquote bzw. Ausfallwahrscheinlichkeit pro Zeiteinheit akzeptiert werden kann. Andere Komponenten können über Verschleißerscheinungen die Getränkequalität schleichend beeinflussen (beispielsweise: Mahlscheiben im Mahlwerk 2a), was mit einer gewissen Tolerierung der Qualität zunächst kein hartes Ausfallkriterium darstellt. Weitere Komponenten (beispielsweise: Wasserfilter) funktionieren zunächst über lange Zeit relativ zuverlässig und versagen relativ punktgenau.

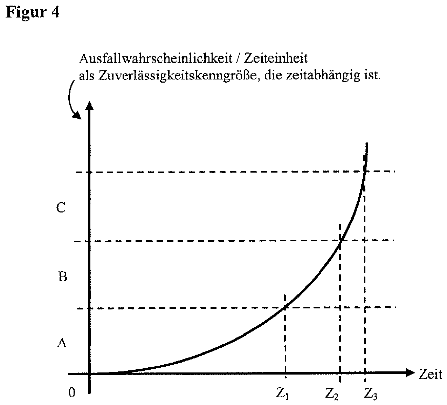

Somit kann die Ordinate (Zuverlässigkeitskenngröße) über der Abszisse (Zeit), also der Zuverlässigkeitskenngrößenverlauf für eine Komponente, in Phasen eingeteilt werden, die unterschiedliche Tauschkriterien für die Komponente definieren können. Siehe hierzu den Ausfallwahrscheinlichkeitsverlauf pro Zeiteinheit über der Zeit in Figur 4 mit der zugehörigen Phaseneinteilung in Figur 3 (die Phase A, die im Zeitintervall von 0 bis z₁ vorliegt, geht in die Phase B und schließlich in die Phase C über). Beispielsweise könnte zum Zeitpunkt z₁ beim Ablauf der Phase A für eine Dichtung (Zeile 3 in Fig. 3) eine erste Warnung als Wartungsempfehlung auf dem Display 6 ausgegeben werden ("Dichtung beginnt zu verschleißen."). Zum Zeitpunkt z₂, also nach dem Ablauf der Phase B könnte eine dringendere Wartungsempfehlung am Display 6 ausgegeben werden ("Dichtung zeigt erkennbaren Verschleiß. Bitte tauschen."). Zum Zeitpunkt z₃, also zu einem bestimmten Zeitpunkt in Phase C bzw. nach der Phase C kann eine automatisierte Sperrung der Maschine aufgrund einer nicht mehr tolerierbaren Abnutzung der Dichtung erfolgen: Dabei kann in der Steuereinheit 7 ein entsprechender Wartungsbefehl generiert werden, der die Funktion der Maschine 1 sperrt, wobei dann gleichzeitig am Display 6 als War-tungs"empfehlung" folgendes ausgegeben werden kann: "Dichtung verbraucht. Dichtung muss ersetzt werden, bevor Maschine wieder in Betrieb genommen werden kann.".

Durch feine Gliederungen solcher Phasen bzw. Abschnitte kann eine Wartung gut an Kundenbedürfnisse angepasst werden. Figur 3 zeigt einen Einstufungsvorschlag verschiedener Phasen mit Beispielen für wartungsrelevante Komponenten (linke Spalte ab Zeile 3). Erfindungsgemäß kann ein kostenoptimierter Wartungsplan (der wenige Servicetermine pro Zeiteinheit umfasst) generiert werden. Dies kann erfolgen durch Hochrechnung eines Termins, wann eine erste der wartungsrelevanten Komponenten in Phase C geht. Dann kann ein Vorschlag des Folgetermins (beispielsweise: ein Jahr) erfolgen. Daraus wird nun für eine solche kostenoptimierte Wartung aufgezeigt, welche Komponenten in die Phase B kommen und welche Phase erreichen würden. Beim Erreichen von Phase C wird die jeweilige Komponente getauscht, die Komponenten, die sich noch in Phase B befinden, können bleiben.

Ebenso kann eine Wartungsplan mit Zuverlässigkeits-optimierter Wartung generiert werden. Hierbei kann eine Hochrechnung des Termins erfolgen, wann die erste der wartungsrelevanten Komponenten Phase B erreicht. Es kann dann ein Vorschlag des Folgetermins (beispielsweise: ein Jahr) erfolgen. Daraus wird nun für die Zuverlässigkeits-optimierte Wartung aufgezeigt, welche Komponenten in die Phase B kommen. Auch diese Komponenten werden, anders als bei der kostenoptimierten Wartung, mitgetauscht.

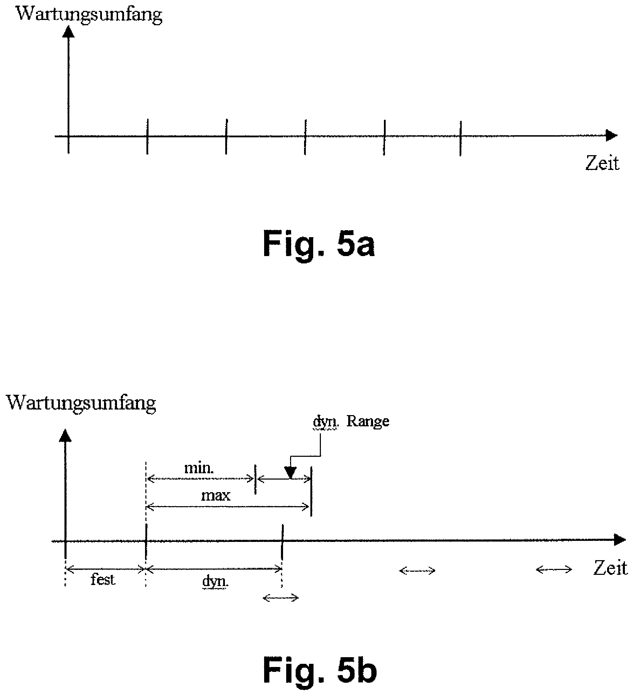

Figur 5a zeigt ein Beispiel für feste Wartungsintervalle: Der Zeitabstand der einzelnen Wartungstermine ist fest vorgegeben, es wird jeweils erfindungsgemäß der Wartungsumfang berechnet.

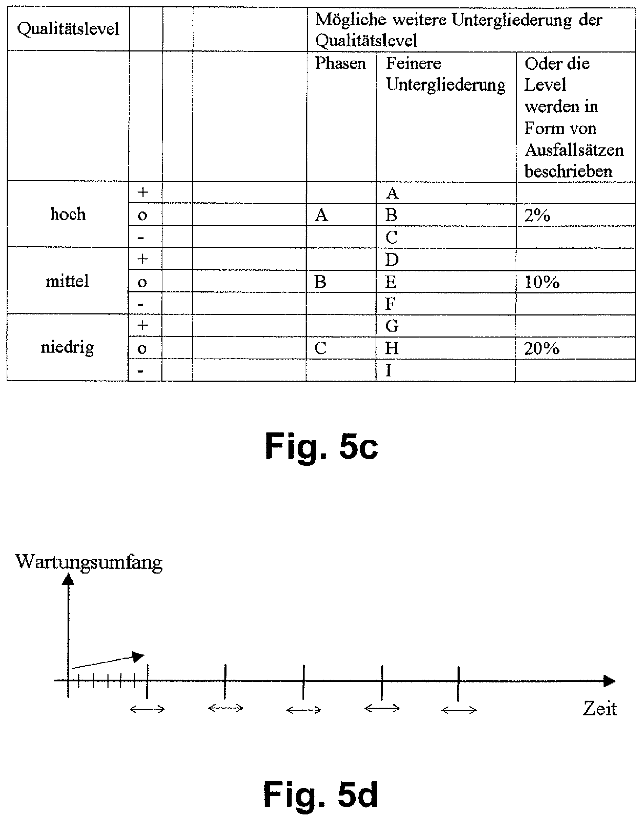

Figur 5b zeigt ein weiteres Beispiel, bei dem die Erstwartung fest vorgegeben ist, die darauffolgenden Wartungstermine bzw. Wartungsintervalle werden erfindungsgemäß dynamisch berechnet. Nach Auswertung des ersten (festen) Wartungsintervalls werden Umfang und Zeitpunkt der nächsten Wartung berechnet. Vergleiche auch Beispiel in Figur 5c. Entsprechend kann nach Auswertung des zweiten Wartungsintervalls ("dynamisch" in Figur 5b) jeweils der Umfang und der nächste Wartungszeitpunkt berechnet werden usw.

Figur 5d zeigt eine Wartungsplangenerierung der vorliegenden Erfindung, bei der alle Wartungsintervalle dynamisch gesetzt werden. Mit Beginn der Nutzung kann eine laufende Hochrechnung zur Bestimmung des jeweils nächsten Wartungszeitpunkts und des jeweils nächsten Wartungsumfangs erfolgen.

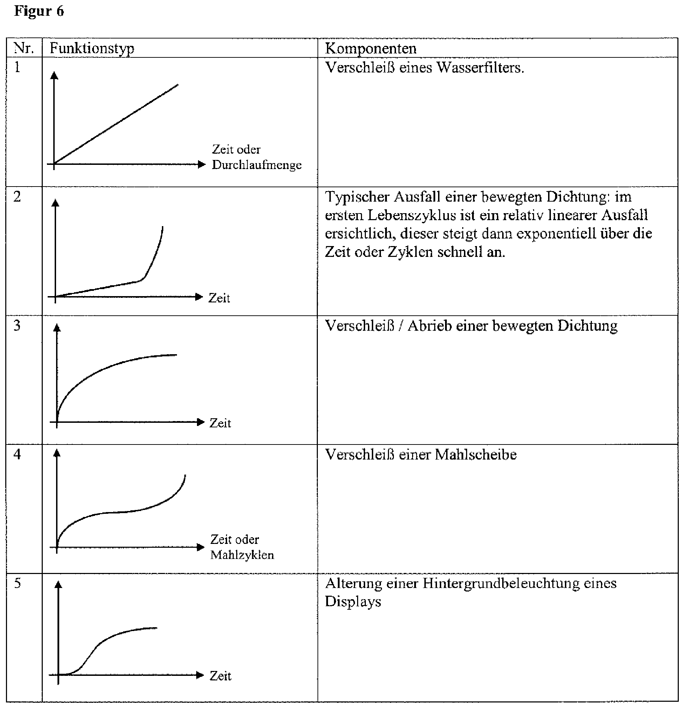

Figur 6 zeigt, dass in die Berechnung der Zuverlässigkeitskenngröße einer Komponente eine der Komponente angepasste, geeignete Kurvenfunktion eingehen kann (Optimierung für tatsächliche Verhältnisse). Hintergrund ist hier, dass nicht jede wartungsrelevante Komponente sich hinsichtlich ihrer Qualität (z.B. ausgedrückt als Ausfallwahrscheinlichkeit pro Zeiteinheit auf der Ordinate) linear verhält. So kann abhängig von der Zeit (Abszisse) oder der Zyklenzahl eine unterschiedlich geformte Kurvenfunktion in die Berechnung der Zuverlässigkeitskenngröße einer wartungsrelevanten Komponente eingehen. Alle bereits beschriebenen Faktoren Lastkenngröße, Betriebsdaten, Betriebsdauer und Sensorik können Bestandteil der Kurvenfunktion sein. Neben den in Figur 6 gezeigten zweidimensionalen Beispielen für Kurvenfunktionen können auch mehrdimensionale Kurvenfunktionen der Dimension ≥ 3 berücksichtigt werden. Figur 6 zeigt Beispiele typischer Kurvenfunktionen für verschiedene wartungsrelevante Komponenten der Kaffeemaschine 1.

Die Berechnung der Zuverlässigkeitskenngrößen (sowie ggfs. daraus abgeleiteter Kenngrößen wie z.B. Wartungsanweisungen) kann nicht nur im Prozessor der zentralen Steuereinheit 7 der Maschine 1 erfolgen, sondern auch extern (Verbindung über die Datenleitung 8a) in einem externen, ausgelagerten System 8. So können beispielsweise die Bestimmungsschritte für die Lastkenngrößen 3 eines erfindungsgemäßen Verfahrens mittels der Steuereinheit 7 der Maschine 1 erfolgen, während die Berechnungsschritte für die Zuverlässigkeitskenngrößen 4 sowie die Generierungsschritte für die Wartungsanweisungen auf dem externen System 8 erfolgen können. Die generierten Wartungsanweisungen wie z.B. Wartungszeitpunkte, anzuzeigende Wartungsempfehlungen oder auch die an die Maschine gerichtete Wartungsbefehle können dann vom externen System 8 über die Datenleitung 8a an die zentrale Steuereinheit 7 übermittelt werden. Das System 8 kann somit über geeignete Schnittstellen mit der Maschine 1 kommunizieren. Beispielsweise können die wesentlichen Schritte eines erfindungsgemäßen Verfahrens als Anwendung auf dem zentralen Server 8 realisiert sein, der der Wartung der Maschine 1 bzw. von mehreren Maschinen 1 zugeordnet ist. Daten der Maschine(n) 1 können per RDA-Modul, Ethernet oder auch über weitere übliche Netzwerk-Kommunikationsschnittstellen auf den Server 8 übertragen werden. Ausfalldaten, Betriebsparameter, Lastkenngrößen, erfasste Verschleißdaten usw. bei einer Wartung ausgetauschter Komponenten können für eine bestimmte Maschine 1 (oder auch eine Maschinenpopulation umfassend mehrerer solcher Maschinen) in einer externen Datenbank auf dem Server 8 abgelegt und auch statistisch ausgewertet werden. Dies kann einer Optimierung und Aktualisierung von Daten für zukünftige Berechnungen (Bewertungen) von Wartungsdaten einzelner Komponenten dienen. Eine Planung und eine Prognose von Wartungsterminen kann ein bestimmtes Wissen des Nutzungsverhaltens an einer Maschine 1 voraussetzen. Solche für Komponenten erfasste Daten aus der Vergangenheit können zur Bestimmung einer tatsächlichen Abnutzung von wartungsrelevanten Komponenten je Komponente gesammelt werden (z.B. in einer Datenbank auf dem Server 8) und in die Zukunft extrapoliert werden unter der Annahme, dass auch zukünftige Belastungen der Maschine 1 bzw. deren Komponenten 2a bis 2e dem Muster aus der Vergangenheit folgen.

Tritt nun der Fall ein, dass die Maschine 1 massiv anders genutzt wird als in der Vergangenheit (Beispiel: Eine Eisdiele hatte in den Sommermonaten eine hohe Belastung, für die anstehenden Wintermonate nach einer Wartung im September wird eine niedrige Belastung erwartet, da die Eisdiele nur für angemeldete Besuche geöffnet hat), so kann auch dies berücksichtigt werden: Extrapolierte Kenngrößen (z.B. erwartete Brühzyklen je Monat, Kaffeebohneneinsatz je Monat usw.) können entsprechend der erwarteten Belastungsänderung manipuliert bzw. angepasst werden und bei der Berechnung von zu erwartenden Abnutzungen verschiedener Komponenten (zukünftige Belastung) berücksichtigt werden bzw. die zu erwartende zukünftige Belastung kann entsprechend errechnet werden.

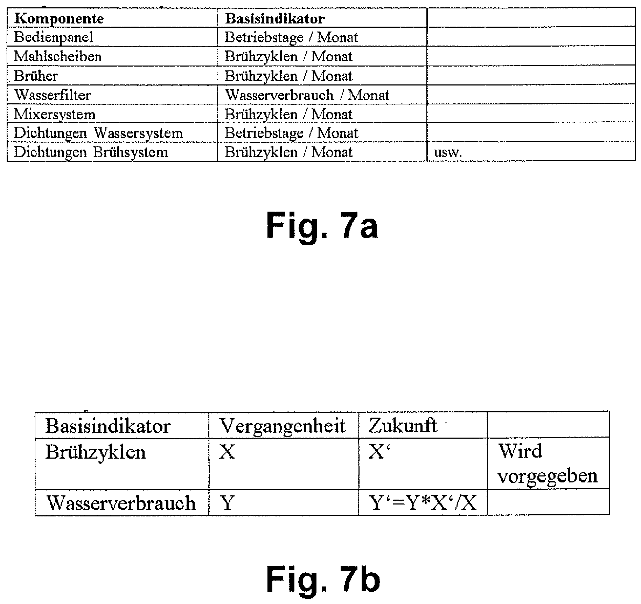

Praktisch kann dies durchgeführt werden, indem die Abszisse der Zuverlässigkeitskenngrößen bzw. der Kurvenfunktionen (vgl. z.B. Figuren 4 und 6) jeder wartungsrelevanten Komponente einem sinnvollen Basisindikator zugeordnet wird. Ein Beispiel für die Zuordnung solcher Basisindikatoren zeigt Figur 7a. Ein solcher Basisindikator kann in den Maschinendaten erfasst werden und in die Zukunft extrapoliert werden. Basisindikatoren können vorteilhafterweise sein: Betriebstage, Brühzyklen, Wasserverbrauch. Die Basisindikatoren können dabei in linearem Zusammenhang zueinander stehen, vgl. das Beispiel in Figur 7b.

Nun kann durch Eingabe eines erwarteten Basisindikators (z.B. Betriebstage, Wasserverbrauch, Brühzyklen) eine Hochrechnung auf die Zuverlässigkeitskenngrößen aller Komponenten der Maschine 1 erfolgen, da die verschiedenen Basisindikatoren der verschiedenen Komponenten in einem bekannten Zusammenhang stehen.

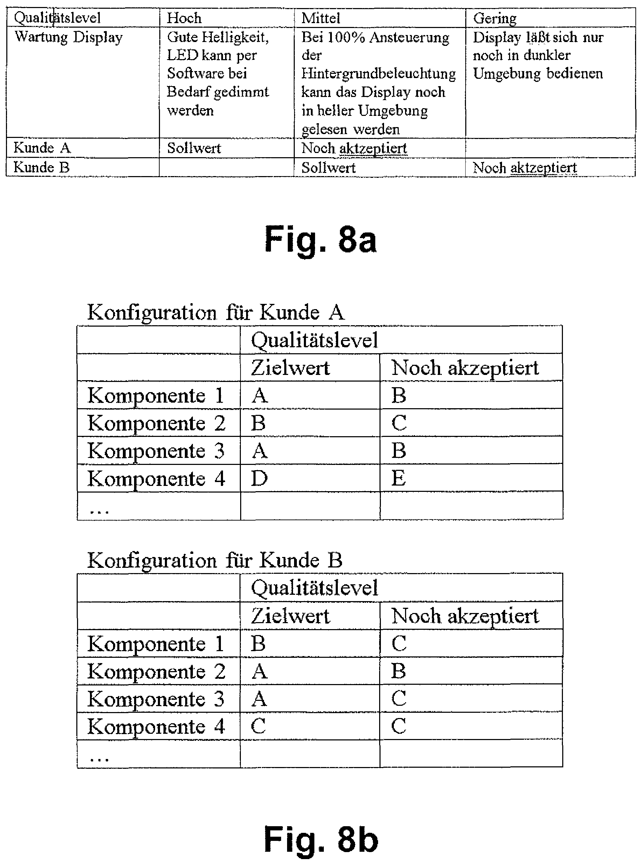

An die wartungsrelevanten Komponenten können durchaus, abhängig vom Aufstellungsort oder vom Besitzer der Maschine 1, unterschiedliche Anforderungen gestellt werden. So kann ein erster Besitzer (Kunde A) mit einem Aufstellungsort in einer sehr hellen Umgebung eine sehr viel höhere Qualitätsstufe bzgl. der Display-Helligkeit benötigen, als ein Besitzer 2 (Kunde B), der die Maschine 1 in einer dunklen Diskothek betreibt. Vergleiche Figur 8a.

Gewünschte Zuverlässigkeitskenngrößen (oder Qualitätslevel) je Komponente können in einer kundenspezifische Tabelle gerätespezifisch zugeordnet werden. Vgl. Beispiel in Figur 8b.

Unter Vorgabe eines geplanten Wartungstermins kann auch mittels einer Interpolation von Daten auf ein Zuverlässigkeits- oder Qualitätslevel jeweils der einzelnen Komponenten (und damit auch auf eine Zuverlässigkeitskenngröße der kompletten Maschine 1) in der Zukunft geschlossen werden.

Neben feststehenden Betriebsdaten oder aus der Maschine 1 auslesbaren Betriebsdaten können insbesondere weitere Verschleißindikatoren die tatsächliche Belastung der wartungsrelevanten Komponenten ermitteln oder zur Berechnung der Zuverlässigkeitskenngrößen der Komponenten beitragen. Als Beispiel kann mittels einer Messung der Display-Helligkeit auf den tatsächlichen Zustand der Hintergrundbeleuchtung des Displays geschlossen werden. Kraftsensoren können die Belastung von Komponenten ermitteln (Beispiel: Dehnmessstreifen, die auf Komponenten aufgebracht werden, die einer Biegebelastung unterliegen).

## Patentansprüche

1. Elektrisch betriebener Getränkebereiter, der eine elektrisch betriebene Kaffeemaschine (1) ist, mit mindestens einer einer Abnutzung unterworfenen und somit wartungsrelevanten Komponente (2a, 2b, ...), wobei mindestens eine eine tatsächliche Abnutzung der wartungsrelevanten Komponente (2a, 2b, ...) kennzeichnende Lastkenngröße (3) bestimmbar ist, wobei die Lastkenngröße(n) der wartungsrelevanten Komponente(n) auf Basis von einem oder mehreren mit dem Getränkebereiter erfassten Betriebsparameter(n) und/oder auf Basis von einem oder mehreren Sensor(en) des Getränkebereiters bestimmbar ist/sind,
**dadurch gekennzeichnet, dass** neben der/den bestimmten Lastkenngröße(n) (3) der wartungsrelevanten Komponente mittels des Getränkebereiters auch eine tatsächliche Betriebsdauer der wartungsrelevanten Komponente oder eine diese tatsächliche Betriebsdauer charakterisierende Betriebsdauerkennzahl (5) bestimmbar ist,
wobei unter Berücksichtigung
i) der bestimmten Lastkenngröße(n) der wartungsrelevanten Komponente (2a, 2b, ...) und
ii) auch der bestimmten tatsächlichen Betriebsdauer oder der diese charakterisierenden Betriebsdauerkennzahl (5)
mindestens eine Zuverlässigkeitskenngröße (4) der wartungsrelevanten Komponente (2a, 2b, ...) berechenbar ist,
wobei die mindestens eine Zuverlässigkeitskenngröße (4) der wartungsrelevanten Komponente (2a, 2b, ...) den Zustand der wartungsrelevanten Komponente (2a, 2b, ...) hinsichtlich deren Gebrauchszustand beschreibt,
wobei die Bestimmung der Lastkenngröße(n) (3) einer oder mehrerer wartungsrelevanten/r Komponente(n) (2a, 2b, ...) in einer zentralen Steuereinheit (7) des Getränkebereiters erfolgt, und
a) die Berechnung der Zuverlässigkeitskenngröße(n) (4) einer oder mehrerer wartungsrelevanten/r Komponente(n) (2a, 2b, ...) in der zentralen Steuereinheit (7) des Getränkebereiters erfolgt, wobei die zentrale Steuereinheit (7) des Getränkebereiters konfiguriert ist, für mindestens eine der wartungsrelevanten Komponenten (2a, 2b, ...) aus deren berechneter/n Zuverlässigkeitskenngröße(n) mindestens eine Wartungsanweisung für diese wartungsrelevante Komponente zu generieren und von dem Getränkebereiter auf einer Anzeige (6) des Getränkebereiters anzeigen zu lassen; oder
b) der Getränkebereiter eine externe Recheneinrichtung (8) aufweist, die über eine bidirektionale Datenleitung (8a) mit der zentralen Steuereinheit (7) des Getränkebereiters verbunden ist, wobei eine Übermittlung von zur Berechnung der Zuverlässigkeitskenngröße(n) (4) einer oder mehrerer wartungsrelevanten/r Komponente(n) (2a, 2b, ...) notwendiger Daten über i) die bestimmten Lastkenngröße(n) der wartungsrelevanten Komponente(n) (2a, 2b, ...) und auch ii) der bestimmten tatsächlichen Betriebsdauer oder der diese charakterisierenden Betriebsdauerkennzahl an die externe Recheneinrichtung (8) erfolgt, und nach besagter Übermittlung die Berechnung der Zuverlässigkeitskenngröße(n) (4) einer oder mehrerer wartungsrelevanten/r Komponente(n) (2a, 2b, ...) in dieser externen Recheneinrichtung (8) erfolgt, bevor eine Übermittlung von mindestens einer Wartungsanweisung für diese wartungsrelevante Komponente (2a, 2b, ...), die aus der/den berechneten Zuverlässigkeitskenngröße(n) (4) generiert wurde, an die zentrale Steuereinheit (7) des Getränkebereiters erfolgt, wobei die zentrale Steuereinheit (7) des Getränkebereiters konfiguriert ist, die Wartungsanweisung von dem Getränkebereiter auf einer Anzeige (6) des Getränkebereiters anzeigen zu lassen.

2. Getränkebereiter nach dem vorhergehenden Anspruch,
***dadurch gekennzeichnet, dass***
beim Bestimmen der Lastkenngröße(n) (3) und/oder beim Berechnen der Zuverlässigkeitskenngröße(n) (4) der wartungsrelevanten Komponente(n) auch eine oder mehrere vorgegebene Eigenschaft(en) der Komponente(n) berücksichtigbar ist/sind.

3. Getränkebereiter nach einem der vorhergehenden Ansprüche,
***gekennzeichnet durch***
mehrere wartungsrelevante Komponenten (2a, 2b, ...), für die jeweils eine oder mehrere die jeweilige Komponente (2a, 2b, ...) kennzeichnende Lastkenngröße (3) bestimmbar ist/sind und für die aus der/den bestimmten Lastkenngröße(n) (3) jeweils eine oder mehrere Zuverlässigkeitskenngröße(n) der jeweiligen Komponente (2a, 2b, ...) berechenbar ist/sind.

4. Getränkebereiter nach einem der vorhergehenden Ansprüche,
***dadurch gekennzeichnet, dass***
die Berechnung der Zuverlässigkeitskenngröße(n) (4) mindestens einer wartungsrelevanten Komponente (2a, 2b, ...) eine oder mehrere Umgebungsbedingung(en) berücksichtigt.

5. Getränkebereiter nach einem der vorhergehenden Ansprüche,
***gekennzeichnet durch***
eine, mehrere oder alle wartungsrelevante Komponente(n) (2a, 2b, ...) wie folgt:
• ein oder mehrere Mahlwerk(e) (2a),
• ein oder mehrere Motor(en) (2b),
• ein oder mehrere Pumpe(n) (2c),
• ein oder mehrere Dichtung(en),
• ein oder mehrere Ventil(e),
• ein oder mehrere Anzeigeelement(e) (2d),
• ein oder mehrere Bedienelement(e) (2e),
• ein oder mehrere Wasserfilter,
• ein oder mehrere Kühlelement(e), insbesondere Ventilator(en),
und/oder
• ein oder mehrere Auslauf/Ausläufe.

6. Verfahren zum Betrieb eines Getränkebereiters nach einem der vorhergehenden Ansprüche, der eine elektrisch betriebene Kaffeemaschine ist, und der eine oder mehrere einer Abnutzung unterworfene und somit wartungsrelevante Komponente(n) (2a, 2b, ...) aufweist,
wobei für die eine oder mehrere(n) der wartungsrelevante(n) Komponente(n) (2a, 2b, ...) jeweils eine oder mehrere eine tatsächliche Abnutzung der jeweiligen wartungsrelevanten Komponente (2a, 2b, ...) kennzeichnende Lastkenngröße(n) (3) bestimmt wird/werden, wobei die Lastkenngröße(n) der wartungsrelevanten Komponente(n) auf Basis von einem oder mehreren mit dem Getränkebereiter erfassten Betriebsparameter(n) und/oder auf Basis von einem oder mehreren Sensor(en) des Getränkebereiters bestimmbar ist/sind,
wobei neben der/den bestimmten Lastkenngröße(n) (3) der wartungsrelevanten Komponente mittels des Getränkebereiters auch eine tatsächliche Betriebsdauer der wartungsrelevanten Komponente oder eine diese tatsächliche Betriebsdauer charakterisierende Betriebsdauerkennzahl (5) bestimmt wird,
wobei für die eine oder mehrere(n) wartungsrelevante(n) Komponente(n) (2a, 2b, ...) unter Berücksichtigung
i) der bestimmten Lastkenngröße(n) der wartungsrelevanten Komponente(n) (2a, 2b, ...) und
ii) auch der bestimmten tatsächlichen Betriebsdauer oder der diese charakterisierenden Betriebsdauerkennzahl (5)
jeweils mindestens eine Zuverlässigkeitskenngröße (4) berechnet wird,
wobei die mindestens eine Zuverlässigkeitskenngröße (4) der wartungsrelevanten Komponente (2a, 2b, ...) den Zustand der jeweiligen wartungsrelevanten Komponente (2a, 2b, ...) hinsichtlich deren Gebrauchszustand beschreibt,
wobei die Bestimmung der Lastkenngröße(n) (3) einer oder mehrerer wartungsrelevanten/r Komponente(n) (2a, 2b, ...) in einer zentralen Steuereinheit (7) des Getränkebereiters erfolgt, und
a) die Berechnung der Zuverlässigkeitskenngröße(n) (4) einer oder mehrerer wartungsrelevanten/r Komponente(n) (2a, 2b, ...) in einer zentralen Steuereinheit (7) des Getränkebereiters erfolgt, wobei von der zentralen Steuereinheit (7) des Getränkebereiters für mindestens eine der wartungsrelevanten Komponenten (2a, 2b, ...) aus deren berechneter/n Zuverlässigkeitskenngröße(n) mindestens eine Wartungsanweisung für diese wartungsrelevante Komponente generiert wird und von dem Getränkebereiter auf einer Anzeige (6) des Getränkebereiters angezeigt wird; oder
b) der Getränkebereiter eine externe Recheneinrichtung (8) aufweist, die über eine bidirektionale Datenleitung (8a) mit der zentralen Steuereinheit (7) des Getränkebereiters verbunden ist, wobei eine Übermittlung von zur Berechnung der Zuverlässigkeitskenngröße(n) (4) einer oder mehrerer wartungsrelevanten/r Komponente(n) (2a, 2b, ...) notwendiger Daten über i) die bestimmten Lastkenngröße(n) der wartungsrelevanten Komponente(n) (2a, 2b, ...) und auch ii) der bestimmten tatsächlichen Betriebsdauer oder der diese charakterisierenden Betriebsdauerkennzahl an die externe Recheneinrichtung (8) erfolgt und nach besagter Übermittlung die Berechnung der Zuverlässigkeitskenngröße(n) (4) einer oder mehrerer wartungsrelevanten/r Komponente(n) (2a, 2b, ...) in dieser externen Recheneinrichtung (8) erfolgt, bevor eine Übermittlung von mindestens einer Wartungsanweisung für diese wartungsrelevante Komponente (2a, 2b, ...), die aus der/den berechneten Zuverlässigkeitskenngröße(n) (4) generiert wurde, an die zentrale Steuereinheit (7) des Getränkebereiters, erfolgt, wobei die mindestens eine Wartungsanweisung von dem Getränkebereiter auf einer Anzeige (6) des Getränkebereiters angezeigt wird.

## Claims

1. Electrically operated beverage maker, which is an electrically operated coffee machine (1), having at least one component (2a, 2b, ...) which is subjected to wear and tear and hence maintenance-relevant,
wherein at least one load parameter (3) which characterizes an actual wear and tear of the maintenance-relevant component (2a, 2b, ...) can be determined, wherein the load parameter(s) of the maintenance-relevant component(s) can be determined on the basis of one or more operational parameter(s) detected by the beverage maker and/or or one or more sensor(s) of the beverage maker,
**characterized in that**,
in addition to the load parameter(s) (3) of the maintenance-relevant component, also an actual operational duration of the maintenance-relevant component, or an operational duration characteristic number (5) which characterizes this actual operational duration, can be determined by means of the beverage maker,
wherein at least one reliability parameter (4) of the maintenance-relevant component (2a, 2b, ...) can be calculated, taking into account
i) the specific load parameter(s) of the maintenance-relevant component (2a, 2b, ...), and
ii) also the determined actual operational duration, or the operational duration characteristic number (5),
wherein the at least one reliability parameter (4) of the maintenance-relevant component (2a, 2b, ...) describes the state of the maintenance-relevant component (2a, 2b, ...) with respect to the state of use thereof,
wherein the determination of the load parameter(s) (3) of one or more maintenance-relevant component(s) (2a, 2b, ...) is effected in a central control unit (7) of the beverage maker, and
a) the calculation of the reliability parameter(s) (4) of one or more maintenance-relevant component(s) (2a, 2b, ...) is effected in the central control unit (7) of the beverage maker, wherein the central control unit (7) is configured to generate, for at least one of the maintenance-relevant components (2a, 2b, ...), at least one maintenance instruction for the maintenance-relevant component (2a, 2b, ...) based on the calculated reliability parameter(s) thereof, and to display it on a display (6) of the beverage maker; or
b) the beverage maker comprises an external computing device (8) which is connected to the central control unit (7) of the beverage maker via a bidirectional data line (8a), wherein a transmission of data about i) the specific load parameter(s) of the maintenance-relevant component (2a, 2b, ...), and ii) also the determined actual operational duration, or the operational duration characteristic number (5), which is necessary for the calculation of the reliability parameter(s) (4) of one or more maintenance-relevant component(s) (2a, 2b, ...), to the external computing device (8) is effected, and after said transmission, the calculation of the reliability parameter(s) (4) of one or more maintenance-relevant component(s) (2a, 2b, ...) is effected in this external computing device (8) before a transmission of at least one maintenance instruction for the maintenance-relevant component (2a, 2b, ...), which has been generated from the calculated reliability parameter(s), to the central control unit (7) is effected, wherein the central control unit (7) of the beverage maker is configured to make the beverage maker display the maintenance instruction on a display (6) of the beverage maker.

2. Beverage maker according to the preceding claim,
**characterized in that**,
when determining the load parameters (3) and/or when calculating the reliability parameter(s) (4) of the maintenance-relevant component(s), also one or more prescribed property/properties of the component(s) can be taken into account.

3. Beverage maker according to one of the preceding claims,
**characterised by**
a plurality of maintenance-relevant components (2a, 2b, ...), for which respectively one or more load parameter (3) which characterizes the respective component (2a, 2b, ...) can be determined, and for which respectively one or more reliability parameter(s) of the respective component (2a, 2b, ...) can be calculated from the determined load parameter(s) (3).

4. Beverage maker according to one of the preceding claims,
**characterised in that**
the calculation of the reliability parameter(s) (4) of at least one maintenance-relevant component (2a, 2b, ...) takes into account one or more environmental condition(s).

5. Beverage maker according to one of the preceding claims,
**characterised by**
one, several or all the maintenance-relevant component(s) (2a, 2b, ...) as follows:
• one or more grinder(s) (2a),
• one or more motor(s) (2b),
• one or more pump(s) (2c),
• one or more seal(s)
• one or more valve(s),
• one or more display element(s) (2d),
• one or more operating element(s) (2e),
• one or more water filter(s),
• one or more cooling element(s),
and/or
• one or more outlet/outlets.

6. Method for operating a beverage maker according to one of the preceding claims, which is an electrically operated coffee machine (1) and has one or more component(s) (2a, 2b, ...) which are subjected to wear and tear and hence maintenance-relevant,
wherein, for the one or more maintenance-relevant component(s) (2a, 2b, ...), respectively one or more load parameter(s) (3) which characterizes/characterize an actual wear and tear of the respective maintenance-relevant component (2a, 2b, ...) is/are determined, wherein the load parameter(s) of the maintenance-relevant component(s) can be determined on the basis of one or more operational parameter(s) detected by the beverage maker and/or or one or more sensor(s) of the beverage maker,
wherein, in addition to the specific load parameter(s) (3) of the maintenance-relevant component, also an actual operational duration of the maintenance-relevant component, or an operational duration characteristic number (5) which characterizes this actual operational duration, is determined by means of the beverage maker,
wherein, for the one or more maintenance-relevant component(s) (2a, 2b, ...), at least one reliability parameter (4) is calculated taking into account
i) the specific load parameter(s) of the maintenance-relevant component(s) (2a, 2b, ...), and
ii) also the determined actual operational duration, or the operational duration characteristic number (5),
wherein the at least one reliability parameter (4) of the maintenance-relevant component (2a, 2b, ...) describes the state of the maintenance-relevant component (2a, 2b, ...) with respect to the state of use thereof,
wherein the determination of the load parameter(s) (3) of one or more maintenance-relevant component(s) (2a, 2b, ...) is effected in a central control unit (7) of the beverage maker, and
a) the calculation of the reliability parameter(s) (4) of one or more maintenance-relevant component(s) (2a, 2b, ...) is effected in the central control unit (7) of the beverage maker, wherein, for at least one of the maintenance-relevant components (2a, 2b, ...), based on the calculated reliability parameter(s) thereof, at least one maintenance instruction for the maintenance-relevant component (2a, 2b, ...) is generated by the central control unit (7) and is displayed on a display (6) of the beverage maker; or
b) the beverage maker comprises an external computing device (8) which is connected to the central control unit (7) of the beverage maker via a bidirectional data line (8a), wherein a transmission of data about i) the specific load parameter(s) of the maintenance-relevant component (2a, 2b, ...), and ii) also the determined actual operational duration, or the operational duration characteristic number (5), which is necessary for the calculation of the reliability parameter(s) (4) of one or more maintenance-relevant component(s) (2a, 2b, ...), to the external computing device (8) is effected, and after said transmission, the calculation of the reliability parameter(s) (4) of one or more maintenance-relevant component(s) (2a, 2b, ...) is effected in this external computing device (8) before a transmission of at least one maintenance instruction for the maintenance-relevant component (2a, 2b, ...), which has been generated from the calculated reliability parameter(s), to the central control unit (7) is effected, wherein the at least one maintenance instruction is displayed by the beverage maker on a display (6) of the beverage maker.

## Revendications

1. Préparateur de boissons électrique, qui est une machine à café électrique (1), avec au moins un composant (2a, 2b, ...) soumis à une usure et nécessitant donc un entretien, dans lequel au moins une grandeur caractéristique de sollicitation (3) caractérisant une usure réelle du composant nécessitant un entretien (2a, 2b, ...) peut être déterminée, dans lequel la ou les grandeur(s) caractéristique(s) de sollicitation du ou des composant(s) nécessitant un entretien peut ou peuvent être déterminée(s) sur la base d'un ou plusieurs paramètre(s) de fonctionnement enregistré(s) avec le préparateur de boissons et/ou sur la base d'un ou plusieurs capteur(s) du préparateur de boissons,
**caractérisé en ce qu'**en plus de la ou des grandeur(s) caractéristique(s) de sollicitation (3) déterminée(s) du composant nécessitant un entretien, une durée de fonctionnement réelle du composant nécessitant un entretien ou un indicateur de durée de fonctionnement (5) caractérisant cette durée de fonctionnement réelle peuvent également être déterminés au moyen du préparateur de boissons,
dans lequel, en tenant compte
i) de la ou des grandeur(s) caractéristique(s) de sollicitation déterminée(s) du composant nécessitant un entretien (2a, 2b, ...) et
ii) également de la durée de fonctionnement réelle déterminée ou de la grandeur caractéristique de fonctionnement (5) caractérisant celle-ci,
au moins une grandeur caractéristique de fiabilité (4) du composant nécessitant un entretien (2a, 2b, ...) peut être calculée, dans lequel la au moins une caractéristique de fiabilité (4) du composant nécessitant un entretien (2a, 2b, ...) décrit l'état du composant nécessitant un entretien (2a, 2b, ...) en ce qui concerne son état d'utilisation,
dans lequel la détermination de la ou des grandeur(s) caractéristique(s) de sollicitation (3) d'un ou de plusieurs composant(s) nécessitant un entretien (2a, 2b, ...) est effectuée dans une unité de commande centrale (7) du préparateur de boissons, et
a) le calcul de la ou des grandeur(s) caractéristique(s) de fiabilité(4) d'un ou de plusieurs composant(s) nécessitant un entretien (2a, 2b, ...) est effectué dans l'unité de commande centrale (7) du préparateur de boissons, dans lequel l'unité de commande centrale (7) du préparateur de boissons est configurée pour générer au moins une instruction d'entretien pour au moins un des composants nécessitant un entretien (2a, 2b, ...) à partir de sa ou ses grandeur(s) caractéristique(s) de fiabilité calculée(s) pour ledit composant nécessitant un entretien et la faire afficher par le préparateur de boissons sur un écran (6) du préparateur de boissons ; ou
b) le préparateur de boissons comprend un dispositif de calcul externe (8) qui est connecté à l'unité de commande centrale (7) du préparateur de boissons via une ligne de données bidirectionnelle (8a), dans lequel une transmission au dispositif de calcul externe (8) de données nécessaires au calcul de la ou des grandeur(s) caractéristique(s) de fiabilité(4) d'un ou de plusieurs composant(s) nécessitant un entretien (2a, 2b, ...) est effectuée via i) la ou les grandeur(s) caractéristique(s) de sollicitation déterminée(s) du ou des composant(s) nécessitant un entretien (2a, 2b, ...) et également ii) la durée de fonctionnement réelle déterminée ou l'indice de durée de fonctionnement caractéristique de celle-ci, et après ladite transmission, le calcul de la ou des grandeur(s) caractéristique(s) de fiabilité (4) d'un ou de plusieurs composant(s) nécessitant un entretien (2a, 2b, ...) est effectué dans ledit dispositif de calcul externe (8) avant la transmission à l'unité de commande centrale (7) du préparateur de boissons d'au moins une instruction d'entretien pour ledit composant nécessitant un entretien (2a, 2b, ...), qui a été générée à partir de la ou des grandeur(s) caractéristique(s) de fiabilité (4) calculée(s), dans lequel l'unité de commande centrale (7) du préparateur de boissons est configurée pour afficher l'instruction d'entretien sur un écran (6) du préparateur de boissons.

2. Procédé selon la revendication précédente,
***caractérisé en ce que***
lors de la détermination de la ou des grandeur(s) caractéristique(s) de sollicitation (3) et/ou lors du calcul de la ou des grandeur(s) caractéristique(s) de fiabilité (4) du ou des composant(s) nécessitant un entretien, une ou plusieurs propriété(s) prédéfinie(s) du ou des composant(s) peu(ven)t également être prise(s) en compte.

3. Préparateur de boissons selon l'une quelconque des revendications précédentes,
***caractérisé par***
plusieurs composants nécessitant un entretien (2a, 2b, ...), pour lesquels une ou plusieurs grandeur(s) caractéristique(s) de sollicitation (3) caractérisant le composant respectif (2a, 2b, ...) peuvent être déterminée(s), et pour lesquels une ou plusieurs grandeur(s) caractéristique(s) de fiabilité du composant (2a, 2b, ...) respectif peu(ven)t être calculée(s) à partir de la ou des grandeur(s) caractéristique(s) de sollicitation (3) déterminée(s).

4. Préparateur de boissons selon l'une quelconque des revendications précédentes,
***caractérisé en ce que***
le calcul de la ou des grandeur(s) caractéristique(s) de fiabilité(4) d'au moins un composant nécessitant un entretien (2a, 2b, ...) tient compte d'une ou de plusieurs condition(s) environnementale(s).

5. Préparateur de boissons selon l'une quelconque des revendications précédentes,
***caractérisé par***
un, plusieurs ou tous les composants nécessitant un entretien (2a, 2b, ...) qui suivent :
• un ou plusieurs broyeur(s) (2a),
• un ou plusieurs moteur(s) (2b),
• une ou plusieurs pompe(s) (2c),
• un ou plusieurs joint(s) d'étanchéité,
• une ou plusieurs vanne(s),
• un ou plusieurs élément(s) d'affichage (2d),
• un ou plusieurs élément(s) de commande (2e),
• un ou plusieurs filtre(s) à eau,
• un ou plusieurs élément(s) de refroidissement, en particulier un ou plusieurs ventilateur(s), et/ou
• un ou plusieurs orifice(s) de sortie.

6. Procédé de fonctionnement d'un préparateur de boissons selon l'une quelconque des revendications précédentes, qui est une machine à café électrique et qui présente un ou plusieurs composant(s) (2a, 2b, ...) soumis à usure et nécessitant donc un entretien,
dans lequel une ou plusieurs grandeur(s) caractéristique(s) de sollicitation (3) caractérisant une usure réelle du composant nécessitant un entretien (2a, 2b, ...) respectif est/sont déterminée(s) pour les un ou plusieurs composant(s) nécessitant un entretien (2a, 2b, ...), dans lequel la ou les grandeur(s) caractéristique(s) de sollicitation du ou des composant(s) nécessitant un entretien peut ou peuvent être déterminée(s) sur la base d'un ou de plusieurs paramètre(s) de fonctionnement enregistré(s) par le préparateur de boissons et/ou sur la base d'un ou de plusieurs capteur(s) du préparateur de boissons,
dans lequel en plus de la ou des grandeur(s) caractéristique(s) de sollicitation (3) déterminée(s) du composant nécessitant un entretien, une durée de fonctionnement réelle du composant nécessitant un entretien ou un indicateur de durée de fonctionnement (5) caractérisant cette durée de fonctionnement réelle est déterminée au moyen du préparateur de boissons,
dans lequel, pour le ou les composant(s) nécessitant un entretien (2a, 2b, ...), en tenant compte
i) de la ou des grandeur(s) caractéristique(s) de sollicitation du composant nécessitant un entretien (2a, 2b, ...) et
ii) également de la durée de fonctionnement réelle déterminée ou de la grandeur caractéristique de fonctionnement (5) caractérisant celle-ci,
respectivement au moins une caractéristique de fiabilité (4) est calculée,
dans lequel la au moins une caractéristique de fiabilité (4) du composant nécessitant un entretien (2a, 2b, ...) décrit l'état du composant nécessitant un entretien (2a, 2b, ...) respectif en ce qui concerne son état d'utilisation,
dans lequel la détermination de la ou des grandeur(s) caractéristique(s) de sollicitation (3) d'un ou de plusieurs composant(s) nécessitant un entretien (2a, 2b, ...) est effectuée dans une unité de commande centrale (7) du préparateur de boissons, et
a) le calcul de la ou des grandeur(s) caractéristique(s) de fiabilité(4) d'un ou de plusieurs composant(s) nécessitant un entretien (2a, 2b, ...) est effectué dans une unité de commande centrale (7) du préparateur de boissons, dans lequel au moins une instruction d'entretien pour lesdits composants nécessitant un entretien (2a, 2b, ...) est générée par l'unité de commande centrale (7) du préparateur de boissons pour au moins un des composants nécessitant un entretien à partir de sa ou ses grandeur(s) caractéristique(s) de fiabilité calculée(s) et est affichée par le préparateur de boissons sur un écran (6) du préparateur de boissons ; ou
b) le préparateur de boissons présente un dispositif de calcul externe (8) qui est connecté à l'unité de commande centrale (7) du préparateur de boissons via une ligne de données bidirectionnelle (8a), dans lequel une transmission au dispositif de calcul externe (8) de données nécessaires au calcul de la ou des grandeur(s) caractéristique(s) de fiabilité (4) d'un ou de plusieurs composant(s) nécessitant un entretien (2a, 2b, ...) est effectuée via i) la ou les grandeur(s) caractéristique(s) de sollicitation déterminée(s) du ou des composant(s) nécessitant un entretien (2a, 2b, ...) et également ii) la durée de fonctionnement réelle déterminée ou l'indice de durée de fonctionnement caractéristique de celle-ci, et, après ladite transmission, le calcul de la ou des grandeur(s) caractéristique(s) de fiabilité (4) d'un ou de plusieurs composant(s) nécessitant un entretien (2a, 2b, ...) est effectué dans ledit dispositif de calcul externe (8) avant la transmission à l'unité de commande centrale (7) du préparateur de boissons d'au moins une instruction d'entretien pour lesdits composants nécessitant un entretien (2a, 2b, ...), qui a été générée à partir de la ou des grandeur(s) caractéristique(s) de fiabilité (4) calculée(s), dans lequel la au moins une instruction d'entretien est affichée par le préparateur de boissons sur un écran (6) du préparateur de boissons.
